(19) Europäisches Patentamt
European Patent Office
Office européen des brevets

(11) **EP 1 659 102 B1**

(12) **EUROPEAN PATENT SPECIFICATION**

(45) Date of publication and mention
of the grant of the patent:
**26.05.2010 Bulletin 2010/21**

(51) Int Cl.:
***C04B 35/10*** *(2006.01)*     ***C04B 35/48*** *(2006.01)*
***B22D 11/10*** *(2006.01)*     ***B22D 41/02*** *(2006.01)*
***C04B 35/76*** *(2006.01)*     ***B22D 11/06*** *(2006.01)*

(21) Application number: **05024232.0**

(22) Date of filing: **22.06.1999**

(54) **Refractory material for casting a rare-earth alloy and its production method as well its use**

Feuerfestes Material zum Giessen von seltenen Erden enthaltenden Legierungen, Verfahren zu dessen Herstellung und Verwendung

Materiau refractaire permettant de couler un alliage des terres rares, procédé de production de ce materiau et son utilisation.

(84) Designated Contracting States:
**AT BE CH CY DE DK ES FI FR GB GR IE IT LI LU MC NL PT SE**

(30) Priority: **22.06.1998 JP 17460198**
**12.05.1999 JP 13092699**

(43) Date of publication of application:
**24.05.2006 Bulletin 2006/21**

(62) Document number(s) of the earlier application(s) in accordance with Art. 76 EPC:
**99957162.3 / 1 118 601**

(73) Proprietor: **SHOWA DENKO K.K.**
**Minato-ku, Tokyo 105-8515 (JP)**

(72) Inventors:
• **Hasegawa, Hiroshi,**
**c/o Showa Denko K. K.**
**Chichibu-shi,**
**Saitama 369-1871 (JP)**
• **Kawamura, Nobuhiko,**
**c/o Showa Denko K. K.**
**Chichibu-shi,**
**Saitama 369-1871 (JP)**
• **Sasaki, Shiro,**
**c/o Showa Denko K. K.**
**Chichibu-shi,**
**Saitama 369-1871 (JP)**
• **Yoichi, Hirose**
**Chichibu-shi,**
**Saitama 368-0032 (JP)**

(74) Representative: **Popp, Eugen et al**
**Meissner, Bolte & Partner GbR**
**Postfach 86 06 24**
**81633 München (DE)**

(56) References cited:
**EP-A- 0 784 350     GB-A- 1 089 773**
**GB-A- 1 223 938     GB-A- 2 149 773**

• **DEUTSCHE GESELLSCHAFT FEUERFEST UND SCHORNSTEINBAU E.V: "FEUERFESTBAU, 2 AUFLAGE" 1994, VULKAN-VERLAG ESSEN , ESSEN GERMANY , XP002295152 Paragr. 2.3.2.1 (pages 33, 34), Table 11 (page 32), Samples with ASTM-Group 30,32 and 33**
• **DATABASE COMPENDEX [Online] ENGINEERING INFORMATION, INC., NEW YORK, NY, US; 1976, RABINOVICH M A: "LIGHTWEIGHT MULLITE-SILICA REFRACTORIES" XP002295153 Database accession no. EIX77050004069 & REFRACTORIES MAR-APR 1976, vol. 17, no. 3-4, March 1976 (1976-03), pages 146-147,**
• **DATABASE WPI Section Ch, Week 199304 Derwent Publications Ltd., London, GB; Class L02, AN 1993-034173 XP002295154 & SU 1 715 781 A1 (VYMPEL COOP) 28 February 1992 (1992-02-28)**
• **PATENT ABSTRACTS OF JAPAN vol. 0145, no. 35 (C-0781), 26 November 1990 (1990-11-26) & JP 02 225369 A (KOBE STEEL LTD; others: 01), 7 September 1990 (1990-09-07)**

EP 1 659 102 B1

**Description**

Technical Field

The present invention relates to refractory material for casting a rare-earth alloy, which contains a rare-earth element (R) as one of the main components, such as an alloy for an R-Fe-B based magnet, an R-Ni based hydrogen-absorbing alloy and an alloy for an Sm-Co based magnet. The present invention also relates to a production method of the refractory material.

Background Technique

Recently, attention has been paid to the rare-earth sintered magnet or rare-earth bond magnet, in which the excellent magnetic properties of the rare-earth alloys are utilized. Particularly, with regard to R-Fe-B based magnets, development for further enhancement of the magnetic properties has been conducted. There is in the R-Fe-B based magnets a ferromagnetic $R_2Fe_{14}B$ phase, which is the basis of the magnetism, and an R-rich phase (a non-magnetic phase having high concentration of the rare-earth elements, such as Nd) which is the basis of liquid-phase sintering and greatly contributes to enhancement of the magnetic properties.

It is necessary to increase the volume fraction of the ferromagnetic $R_2Fe_{14}B$ phase to attain higher performance of a magnet. This necessarily results in decrease of the volume fraction of the R-rich phase. Therefore, when the casting is carried out by a conventional method, the R-rich phase is so poorly dispersed that the R-rich phase is locally deficient, resulting in unsatisfactory properties in many cases.

Meanwhile, when the magnet composition has a higher volume fraction of the $R_2Fe_{14}B$ phase, a -Fe is more liable to form in the alloy for the magnet. This $\alpha$-Fe seriously impairs the crushability of the alloy for the magnet, and hence causes composition variation at the crushing process. This, in turn, incurs decrease of the magnetic properties and increase in variation of the magnetic properties.

Therefore, methods for solving these problems involved in the high-performance magnets have been proposed. A strip-casting method is proposed in Japanese Unexamined Patent Publications Nos. 5-222488 and 5-295490. Since this method attains, in the solidification, higher cooling speed than in the conventional book-mold casting method, it is possible to produce an alloy having refined structure and finely dispersed R-rich phase. The formation of $\alpha$ -Fe is difficult in such alloy.

A strip-casting method described in Japanese Unexamined Patent Publication No. 5-222488 resides in that: an alloy ingot for permanent magnet is produced by solidifying the rare earth metal - iron - boron alloy melt; the alloy melt is subjected, in the production, to cooling under condition of from 10 to 500°C/second of cooling speed, and 10 to 500°C of the super cooling degree; the alloy melt is homogeneously solidified into an ingot having a thickness in the range of from 0.05 to 15 mm. The specific casting method is to flow down the melt from a tundish onto a rotary roll.

Japanese Unexamined Patent Publication No. 5-295490 exemplifies a rotary disc method for making an alloy in the form of fish scale and a twin-roll method for making an alloy in the form of a strip or pieces.

Meanwhile, the R-Ni based hydrogen-absorbing alloy having excellent hydrogen-absorbing property has recently attracted attention as the electrode material of the secondary battery. Such elements as Co, Mn, Al and the like are added into this alloy to enhance the hydrogen-absorbing property and other material properties. In the production by a conventional book-mold casting method, additive elements are liable to micro-segregate. Prolonged heat treatment is necessary to homogenize the crystal composition.

In addition, the hydrogen-absorbing alloy is usually pulverized in the pulverization step to a few tens of microns. An alloy obtained by the book-mold casting method is difficult to pulverize, is of large particle diameter and contains a phase with rich additive elements. The post-pulverizing distribution of the powder size is, therefore, non-uniform and exerts detrimental influence upon the hydrogen-absorbing property. The final resultant powder of the hydrogen-absorbing alloy exhibits disadvantageously insufficient hydrogen-absorbing property.

The strip-casting method is proposed to solve the above-described problems (Japanese Unexamined Patent Publication No. 5-3207920). Since higher cooling speed than in the conventional book-mold casting method is attained by solidification in the strip-casting method, homogeneity in the composition and structure of the alloy produced is improved. It is possible to produce, by using this alloy, the secondary battery having such characteristics as high initial charging speed, long battery life, and large electric capacity.

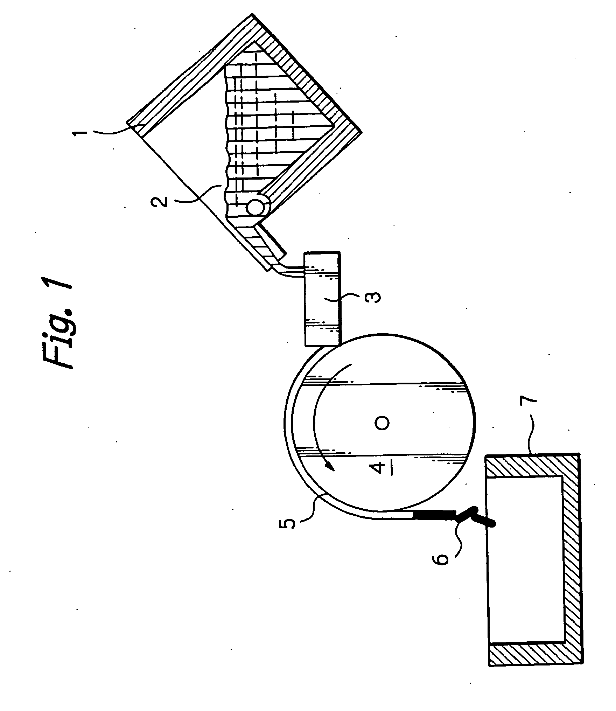

Figure 1 illustrates the strip-casting method. Melt 2 is tapped from a melting furnace (not shown) to a tiltable ladle 1 into a tundish 3. The melt is then fed from there onto a water-cooled copper (single) roll 4 at a predetermined feeding speed. In accordance with the rotation of the roll, the melt 2 is cast-formed on the water-cooled copper roll 4 into a sheet 5. Subsequently, the sheet 5 is separated from the roll and is crushed by a hammer (not shown) into thin pieces 6 which are stored in the metal reservoir 7.

As above, the melt is fed onto a roll in such small amount that the alloy is ordinarily 1 mm or less thick. Heat of melt should, therefore, not be abstracted by the tundish and the like which guides the melt from a crucible to the cooling roll, thereby preventing the solidification.

When the melt is fed by a small amount into a tundish made of ordinary refractory material, such as alumina, mullite, alumina-mullite, magnesia, zirconia or calsia, the heat of the melt is abstracted by the tundish so that the melt solidifies and cannot be cast. In this case, if the amount of heat abstraction is decreased by reducing the thickness of the tundish, good flow of the melt can therefore be maintained. However, such thin tundish is not only difficult to produce but also would be difficult to handle as it may be liable to crack.

In order to prevent the above-described problems from occurring in a tundish made of ordinary refractory material as described above, it is necessary to heat at least the surface of the tundish to approximately the same temperature as that of the melt. However, the following problems are involved in the tundish heating.

① Since the melting temperature is usually 1200 to 1500°C, an apparatus for heating the entire tundish has a complicated structure. A heater capable of heating at this temperature is expensive.
② An apparatus for heating the entire tundish is complicated.
③ Since the heat capacity of a tundish is large, heating takes long time and hence decreases the production efficiency.
④ The heater may discharge electricity depending upon the vacuum degree in the melting furnace. There incurs, thus, a safety problem.

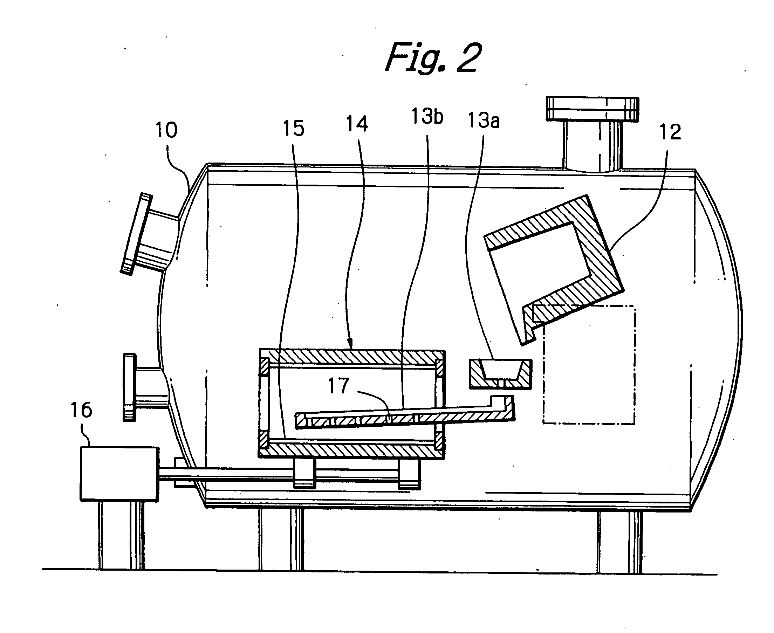

The present applicant proposed in European publication EP 0784350A1: a rapid cooling and centrifugal casting method of hydrogen-absorbing alloy by means of pouring the melt into a rotating cylindrical mold; a casting method, in which the poured melt rotates together with the rotation of the mold and solidifies at its surface during one rotation, and the pouring is successively carried out on the solidified surface; and a method for feeding the melt onto the inner surface of a mold from two or more nozzles located within the mold. An apparatus for carrying out these methods is shown in Fig. 2.

In Fig. 2, a tiltable melting furnace 12, a primary stationary tundish 13a, a secondary reciprocating tundish 13b, and a rotary cylindrical mold 14 are equipped within a vacuum chamber 10. The rotary cylindrical mold 14 is rotated by the rotary mechanism 16.

The melt flows from the melting furnace 12 through the primary stationary tundish 13a and a secondary reciprocating tundish 13b and is then poured into the rotary cylindrical mold 14. The ingot 15, which is cylindrical material, is cast into the inner surface of the rotary cylindrical mold 14. The tundish 13b inserted into the rotary cylindrical mold 14 is provided with several nozzles 17. The tundish 13b is reciprocated so as to rapidly and uniformly feed the melt over the inner surface of the mold.

GB 2 149 773 discloses a refractory moulded body which contains 94 - 97 wt% zirconia ($ZrO_2$) partially stabilized by the oxides CaO, MgO or $Y_2O_3$ and contains additionally $SiO_2$. The raw batch using Dextrin in water as an organic binder, is pressed into a moulded body, dried and fired at 2000°C. The resulting refractory has a bulk density of at least 4,75 g/cm$^3$ and very good resistance with respect to thermal shock.

The present inventors considered the following refractory materials: refractory material for stably feeding the melt of a rare-earth alloy in the strip-casting method; refractory material for feeding a small amount of melt onto a rotary mold in the centrifugal casting method: refractory material for feeding the melt through a thin nozzle in the single-roll melt quenching method; and, in addition, the refractory material for decreasing the temperature drop of the melt fed in small amounts. As a result, the present inventors discovered that virtually no reaction between the melt and $ZrO_2$ based refractory material occurs; and, further, no preliminary heating is necessary in the casting. The present invention was thus arrived at.

Disclosure of Invention.

The refractory material for casting a rare-earth alloy according to the present invention is characterized by the following (1) - (3).

(1) Contents of $ZrO_2$, and $Y_2O_3$, $Ce_2O_3$, CaO, MgO, $Al_2O_3$, $TiO_2$ or $SiO_2$

The refractory material of the present second invention is based on $ZrO_2$. The content of $ZrO_2$ based on the total components including a binder and the like is characterized by 70 wt% or more, and one or more of $Y_2O_3$, $Ce_2O_3$, CaO, MgO, $Al_2O_3$, $TiO_2$ and $SiO_2$ is characterized by 30 wt% or less. Pure $ZrO_2$ has a monoclinic structure at from room temperature to 1170°C, is a distorted tetragonal at from 1170 to 2370°C, and is cubic in the form of a fluorite structure at 2370°C or higher. Along with the transformation from the tetragonal to monoclinic structure at 1170°C in the cooling, volume expansion by 4% takes place. $ZrO_2$ cracks and finally is ruptured as long as it is kept pure (for example, K. Nakajima, S. Shimada: Solid State Ionics, Vol. 101-103, p131-135 (1997)). Its structure is, therefore, modified to an isometric system, where no volume expansion takes place, to prevent rupture. For this purpose, one or more of $Y_2O_3$,

$Ce_2O_3$, CaO or MgO, is added to and substitution-dissolved in $ZrO_2$. The so-stabilized zirconia is used. In addition, addition of one or more of $Al_2O_3$, $TiO_2$ and $SiO_2$ is effective for improving the heat resistance and durability of the mechanical properties. Their addition amount is limited to 30 wt% or less, for the following reasons: rupture is satisfactorily prevented; the solute amount of these components in $ZrO_2$ is limited; $Y_2O_3$ and $Ce_2O_3$ are expensive; and the further addition of CaO, MgO, $Al_2O_3$, $TiO_2$ and $SiO_2$ added in a large amount enhances reactivity with the melt. More preferable addition amount of these in large amount components is in the range of from 1 to 15 wt%.

Actually, $SiO_2$ is bonded with $ZrO_2$ and is present as $ZrSiO_4$.

(2) Bulk Density and Thermal Conductivity

The heat of the rare-earth alloy melt is abstracted by the refractory material. A considerable temperature drop of the melt occurs during the casting process. In extreme cases, a state of complete solidification or semi-solidification is incurred. In order to prevent this, the refractory material should be as porous as possible so as to decrease the thermal conductivity. The thermal conductivity at from 1200 to 1400 °C, which is a representative temperature range of the melt at the casting of a rare-earth alloy, is particularly important. Therefore, the bulk density of the refractory material is set at $1g/cm^3$ or less, and the thermal conductivity in the temperature range of from 1200 to 1400°C is set at 0.5 kcal/(mh°C) or less. Preferably, the bulk density of the refractory material is $0.5g/cm^3$ or less.

In order to decrease the thermal conductivity to as low a level as possible, alumina fiber ($3.87 \ g/cm^3$ of true density) is more preferred than alumina powder which is liable to be densely packed. Particularly, the direction of alumina fibers should not be aligned but the alumina fibers should be randomly arranged and entwined.

(3) Ignition Weight Loss

Ordinarily, the refractory material is shaped by using an organic binder such as resin or an inorganic binder such as water glass. The so-shaped refractory material is used without removing such binder. Therefore, when the refractory material as shaped is used, the organic binder is decomposed into such organic gases as $N_2$, CO, $CO_2$ and the like and $H_2O$, which are brought into reaction with the melt, so that the flowability of the melt is impaired. In addition, bonded water, carbon dioxide and the like are dissociated from the easily decomposable inorganic compounds and exert similar influence. When the flowability of the melt is severely impaired, the melt solidifies in the tundish. It is, therefore, extremely important to preliminarily remove the organic binder and the like from the refractory material as completely as possible. The present invention is, therefore, characterized in that the ratio of ignition weight loss under the heating condition of 1400°C for 1 hour is 0.5 wt% or less.

Production Method of Refractories

Next, according to the method for producing refractory material of the present second invention, one or more selected from the zirconia fiber, the zirconia whisker, stabilized zirconia fiber and stabilized zirconia whisker, and inorganic and/or organic binder are mixed in such a manner to provide 70 wt% or more of $ZrO_2$, and 30 wt% or less of one or more of $Y_2O_3$, $Ce_2O_3$, CaO, MgO, $Al_2O_3$, $TiO_2$ and $SiO_2$ in the refractory material, the mixture is shaped, dried and hardened and then heat-treated at 1000°C to 1400°C.

In the method according to the present invention, one or more selected from zirconia and stabilized zirconia is blended. A part or all of either or both of the zirconia and stabilized zirconia is preferably fiber and/or whisker. For example, only stabilized zirconia fiber may be used, or the zirconia fiber and stabilized zirconia fiber may be combined. Further, a mixture, in which one or more of the organic and inorganic binder is mixed, is shaped. The blending amount of the respective components in the mixture must be to provide 70 wt% or more of $ZrO_2$, and 30 wt% or less of total of one or more of $Y_2O_3$, $Ce_2O_3$, CaO, MgO, $Al_2O_3$, $TiO_2$ and $SiO_2$ in the refractory material. When a $SiO_2$ - containing binder is used such as water glass, the total of $SiO_2$ from the binder, fiber and whisker should attain the predetermined amount.

For example, water glass, colloidal silica and the like can be used as the inorganic binder. For example, ethyl silicate, ethyl cellulose and triethylene glycol can be used as the organic binder. These two kinds of binder may be used together. In this case, the dried strength of a shaped body and its bonding strength at high temperature can be further enhanced. Here, the amount of binder is preferably from 1 to 30 weight parts based on 100 weight parts of the fiber. With regard to the proportion within a binder, the organic binder is preferably from 50 to 100 weight parts based on 100 weight parts of the total binder.

Subsequently, the mixture of fiber and binder is shaped by means of a press, stamp or the like into the shape of a tundish, trough, nozzle and the like. Alternatively, the mixture may be shaped into a simple shape such as a sheet, a cylindrical column or a cylindrical tube, which enables the post-heating forming into a tundish, a trough, a nozzle and the like. Subsequently, sufficient natural drying is carried out to attain hardness which would withstand subsequent handling. The heat treatment is then carried out, thereby promoting the bonding of the fiber and, in addition, decomposing the organic matters in the shaped body to form a porous structure. Since the organic matter decomposes at approximately 400 - 800°C, the porous structure is obtained by the heat treatment at this temperature. However, in order to sufficiently remove the organic binder, the shaped body must be heat-treated at 1000°C to 1400°C. When the heating temperature is less than 1000°C, the decomposition of the organic matter is incomplete, resulting in impairment of the flowability of the melt. On the other hand, when the heating temperature exceeds 1400°C, the shaped body is sintered and embrittles, thereby making its handling difficult. In addition, the shaped body is not resistant against the thermal impact while the melt is flowing and is liable to crack.

The refractory material according to the present invention, for casting the melt of rare-earth alloys is limited from the aspects of composition, bulk density, thermal conductivity and ignition weight loss as described above. Thus, the requirements of heat resistance, flowability of melt, fracture resistance and the thermal impact resistance can be met.

Casting method

The method for casting a rare-earth alloy is characterized in that the melt of a rare-earth alloy is poured onto the surface of a rotary roll via a pouring means, such as a tundish, a trough and a nozzle, which are the shaped refractory material of the first and second invention, thereby producing a sheet, a strip, thin pieces and the like having preferably from 0.1 to 1 mm of thickness. In addition, the method according to the present invention is characterized in that a cylindrical material having preferably from 1 to 20 mm of thickness is produced by means of pouring melt on the inner surface of a rotary cylinder.

The rare-earth alloy indicates an alloy for the rare earth magnets, particularly an alloy for an R-Fe-B based magnet, an R-Ni based hydrogen-absorbing alloy, alloy for an Sm-Co based magnet and the like. Alloy for an R-Fe-B magnet having a composition of 23.0% of Nd, 6.0% of Pr, 1.0% of Dy, 1.0% of B, 0.9% of Co, 0.1% of Cu, 0.3% of Al, and the balance of Fe can be cast. An R - Ni based hydrogen-absorbing alloy having a composition of 8.7% of La, 17.1% of Ce, 2.0% of Pr, 5.7% of Nd, 1.-3% of Co, 5.3% of Mn, 1.9% of Al, and the balance of Ni can be cast. Alloy for an Sm-Co magnet having a composition of 25.0% of Sm, 18.0% of Fe, 5.0% of Cu, 3.0% of Zr, and the balance of Co can be cast. The present invention is, however, not limited to these compositions.

The above-described tundish is a vessel which receives a melt of the rare-earth alloy from a melting furnace or a ladle, and which is provided with a pouring aperture for adjusting the pouring speed required for obtaining a thin-cast product. Since the amount of melt flowing on a tundish is small in the centrifugal casting method or a strip-casting method, the above-described heat-abstraction problems of the melt occur. Next, a trough is a form of the tundish used in the centrifugal casting method and the strip-casting method for guiding the melt into a tundish, in a case where the melting furnace and the tundish are located considerably distant. A nozzle is a pouring aperture provided in the tundish or trough described above or a passage means for guiding the melt onto a rotary roll. Particularly, the nozzles of a tundish used for the centrifugal casting enable control of the accumulating speed of the melt on the inner surface of the rotary cylinder. In addition, when a tundish is used for the strip-casting, the melt in the form of laminar flow can be poured on a single roll or twin rolls at a constant speed. When the amount of melt per pouring is as small as a few tens of kg, the melt may be directly fed from a vessel such as a ladle onto the rotary roll or the like and not via a tundish or trough. When the refractory material according to the present invention is used for a tundish or the like, since the flowability of the melt is improved, the thickness distribution of the thin pieces produced by the casting as well as its structure is homogeneous. In addition, the particle size of the alloy powder for the magnet prepared by crushing the thin pieces, is constant. The final product, i.e., a magnet, can be expected to attain such effects that the magnetic properties are stabilized. Furthermore, by means of controlling the feeding speed of the melt, thin pieces can be easily thinned as small as 0.3 mm or less, in the case of, for example, a strip-casting method. In this case, since the solidification speed of the rare-earth alloy is rapid, fine microstructure can be formed.

Preferable conditions in the casting method are described. Appropriate pouring temperature of the melt into a tundish or the like is 1300 to 1600°C. Preferably, the temperature is from 1350 to 1500°C in the case of an alloy for an R-Fe-B magnet, an example of which composition is shown above, the temperature is from 1350 to 1500°C in the case of the R-Ni based hydrogen-absorbing alloy, an example of the composition is shown above, and the temperature is from 1350 to 1500°C in the case of alloy for the Sm-Co based magnet, an example of the composition is shown above.

In the case of strip casting, the tapping temperature of the melt into a tundish or the like is as follows: 1300-1450°C in the case of an alloy for an R-Fe-B magnet, an example of which composition is shown above, the temperature is from 1300 to 1450°C in the case of the R-Ni based hydrogen-absorbing alloy, an example of the composition is shown above, and the temperature is from 1300 to 1450°C in the case of alloy for the Sm-Co based magnet, an example of the composition is shown above.

The pouring amount of the melt is determined from the area of a rotary cylinder, its rotation speed, and the desired casting thickness. After pouring of the melt, a sheet, a strip, a cylindrical material and the like can be crushed into flake form.

Although although the pouring speed of the melt is very low, the melt of a rare-earth alloy can be cast without preliminarily heating the tundish, the trough and the like. In addition, improved flow of the melt can be realized during the casting without thermally insulating the tundish, trough and the like. Considerable time and caution are required for such preparation operations as pre-heating. Thermal insulation of a tundish necessary to maintain the casting condition relies on experience, in the case of a conventional casting method. When these facts are considered, the casting method according to the present invention can be said to be considerably advanced from the aspects of operability and stability.

Brief Explanation of Drawings

Figure 1 is a drawing for illustrating a strip casting method.
Figure 2 is a drawing for illustrating a conventional centrifugal casting method.
Figure 3 is a drawing of a tundish used in the examples and comparative examples.

Best Mode for Carrying Out the Invention

Examples and Comparative Examples

The present invention is described more in detail by way of examples.
The constituent components of the refractory material used in Examples 1 - 4 and Comparative Examples described below had the following properties.
Alumina fiber: 5 $\mu$m of average diameter, 0.5 mm of average length.
Mullite fiber: 5 $\mu$m of average diameter, 0.5 mm of average length.
Colloidal silica: 3 to 4 $\mu$m of average diameter
Colloidal mullite: 3 to 4 $\mu$m of average diameter
Alumina particle: 3 to 4 $\mu$m of average diameter
Mullite particle: 3 to 4 $\mu$m of average diameter
Ethyl silicate 40, which is a representative ethyl silicate, was used as the binder.

Example 1 (not according to the invention)

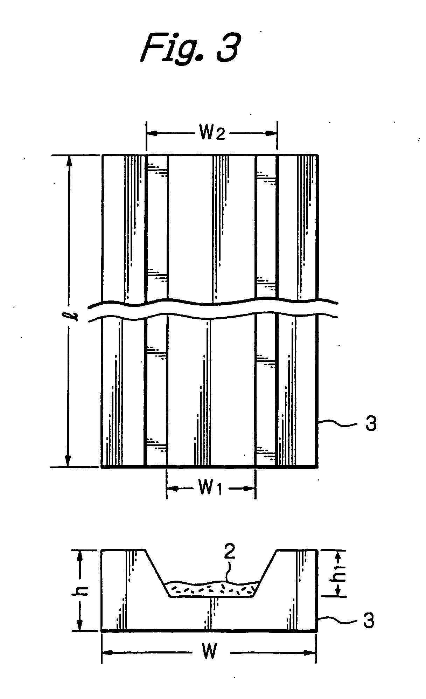

Alumina, mullite and silica were blended to provide the refractory construction as described in Table 1. A binder in 15 weight parts was blended to 100 weight parts of the resultant fiber mixture. The fiber mixture and the binder were sufficiently mixed to provide a slurry mixture. It was then shaped by a press machine into material in the form of a trough-shaped tundish. After hardening by natural drying, heat treatment was carried out at the heat-treating temperature shown in Table 1. The tundish 1 has a shape shown in Fig. 3. The dimension of the respective parts was: 360 mm of width (w), 125 mm of height (h), 900 mm of length (1), 100 mm of depth of the melt-flowing portion ($h_1$), 310 mm of the upper width ($w_1$), and 300 mm of the bottom width ($w_2$).
NdFeB alloy, having 1450°C of temperature directly before the casting (tapping temperature) was caused to flow from one end of the tundish 3, while adjusting the melt feeding amount in such a manner to attain 0.5 mm of thickness of the melt 2. The melt was cast from the other end of the tundish onto a strip-casting roll in total amount of 100 kg. The melt flowed normally without solidification on the tundish. Incidentally, no preliminary heating of the tundish was carried out. When the condition of the tundish was examined after completion of casting, neither discoloring nor foreign matters suggesting its reaction with the melt, were recognized.
In addition, the easiness of melt flow was defined by the following formula. The defined flowing coefficient was 0.67.
Flowing coefficient = actual flowing speed of melt through a nozzle, which melt is stored in the tundish and generating a constant head pressure/ theoretical flowing speed of melt under the same condition flowing through a nozzle, calculated by Bernoulli's theorem.
The theoretical flowing speed (v) shown in this equation is calculated by the following formula, provided that the gravitational acceleration is expressed by g and the height of melt stored in a tundish is expressed by h.

$$V = \sqrt{(2gh)}$$

Example 2 (not according to the invention)

A tundish consisting of the same refractory material as in Example 1 was used in the same strip-casting method as in Example 1 to cast a Mm (misch metal) Ni-based alloy (1450°C of tapping temperature). The melt flowed normally on the tundish without solidifying on the tundish. The flowing coefficient at this time was 0.67
When the condition of the tundish was examined after completion of casting, neither discoloring nor foreign matters suggesting its reaction with the melt, were recognized.

Example 3 (not according to the invention)

A tundish consisting of the same refractory material as in Example 1 was used in the same strip-casting method as in Example 1 to cast an Sm Co-based alloy (1450°C of tapping temperature). The melt flowed normally on the tundish without solidifying on the tundish. The flowing coefficient at this time was 0.71.
When the condition of the tundish was examined after completion of casting, reaction with the melt was not recognized.

Comparative Example 1

A tundish consisting of the refractory material described in Table 1 was manufactured by the same method as in Example 1. It was attempted to cast an NdFeB-based alloy by the same strip-casting method as in Example 1. However, during the course of casting, the flowability of the melt was gradually impaired, finally resulting in solidification. The flowing coefficient during the melt flow with difficulty was 0.26. Incidentally, the heating condition of this refractory material was 800°C for 1 hour. The ratio of ignition weight loss at 1400°C was 4.0 wt%.

Comparative Example 2

The refractory material having the same composition as that of Example 1 was formed into the same tundish as in Example 1. The heating temperature of the refractory material was 1500°C for 1 hour. The refractory material was frequently broken during the forming.

Example 4 (not according to the invention)

A tundish consisting of the refractory material described in Table 1 was produced by the same method as in Example 1 and was used to cast an NdFeB-based alloy by the same strip-casting method as in Example 1. The melt flowed normally on the tundish without solidifying on the tundish. The temperature of the melt directly before the casting (tapping temperature) was 1450°C. The flowing coefficient at this time was 0.77. Preliminary heating of the tundish was not carried out.
When the condition of the tundish was examined after completion of casting, its reaction with the melt was not recognized.

Comparative Example 3

A tundish consisting of the refractory material described in Table 1 as Comparative Example 3 was manufactured by the same method as in Example 1. It was attempted to cast NdFeB based alloy by the same strip-casting method as in Example 1 using the tundish. However, during the course of casting, the flowability of the melt was gradually impaired, finally resulting in solidification. The flowing coefficient during the melt flow with difficulty was 0.29. Incidentally, the heating condition of this refractory material was 800°C for 1 hour. The ratio of ignition weight loss at 1400°C was 4.0 wt%.

Comparative Example 4

The refractory material having the composition described in Table 1 as Comparative Example 4 was formed into a tundish by the same method, as in Example 1. The heat treating condition of the refractory material was 1500°C for 1 hour. The refractory material was frequently broken during the forming.

Comparative Example 5

The refractory material described in Table 1 as Comparative Example 5 was used to form a tundish by the same method as in Example 1. NdFeB-based alloy was cast by the same strip-casting method as in Example 1. The melt flowed on the tundish without solidification. However, during the course of casting, melt leaked through the bottom of the tundish. The flowing coefficient, in which the melt leakage was corrected, was 0.45. When the condition of the tundish was examined after completion of casting, the tundish was broken to form an aperture. The circumference of the aperture was discolored in a broad range. When the tundish was broken to examine the fractured plane, it turned out that almost all parts of the tundish brought into contact with the melt, but not the aperture portion, were discolored. It turned out, thus, a reaction between the melt and the tundish occurred during the casting. It was presumed from this fact that a reason for the lower flowing coefficient than in Example 1 was attributable to the reaction of the melt with the tundish, which impaired melt flowability.

Comparative Example 6

The refractory material described in Table 2 as Comparative Example 6 consisted of alumina fiber, colloidal mullite and crushed particles of the ordinary alumina refractory material. The refractory material was formed into a tundish by the same method as in Example 1. NdFeB-based alloy was cast by the same strip-casting method as in Example 1 while using the tundish mentioned above. From the beginning, the melt flowability was poor, and the melt solidified before it was appreciably cast. The flowing coefficient during the melt flow with difficulty was 0.24.

Comparative Example 7

The refractory material described in Table 2 as Comparative Example 7 consisted of alumina fiber, mullite fiber, colloidal mullite and crushed particles of the ordinary alumina refractory material. The refractory material was formed into a tundish by the same method as in Example 1. NdFeB alloy was cast by the same strip casting method as in Example 1. From the beginning, the melt flowability was poor, and the melt solidified before it was appreciably cast. The flowing coefficient during the melt flow with difficulty was 0.24.

Comparative Example 8

The ordinary refractory material described in Table 3 as Comparative Example 8 was formed into a tundish as in Example 1. It was attempted to produce NdFeB-based alloy by the same strip-casting method as in Example 1. However, as soon as the melt began to flow on the tundish, solidification took place. The casting became thus impossible. After that, the alloy left in the tundish was removed and the condition of the tundish was examined. No reaction of the tundish with the melt was recognized.

Comparative Example 9

The ordinary refractory material described in Table 3 as Comparative Example 9 was formed into a tundish as in Example 1. It was attempted to produce NdFeB-based alloy by the same strip-casting method as in Example 1. However, as soon as the melt began to flow on the tundish, solidification took place. The casting became thus impossible. After that, the alloy left in the tundish was removed and the tundish was broken to observe the fractured plane. Discoloring extended partly into the inner portion of the tundish. The reaction of the tundish with the melt was, therefore, recognized.

Table2 Construction, Main Components and Properties of Refractories

| | Constitution | | | | Main Components | | | | | |
|---|---|---|---|---|---|---|---|---|---|---|
| | Alumina Fiber Content wt% | Mullite Fiber Content wt% | Colloidal Mullite Content wt% | Alumina Particles Content wt% | $Al_2O_3$ Content wt% | $SiO_2$ Content wt% | Bulk Density g/cm³ | Thermal Conductivity (*) Kcal (mh°C) | Heat Treatment | Ratio of Ignition Weight Loss wt% |
| Comparative Examples 6 | 50 | | 10 | 35 | 92 | 3 | 1.6 | 2.3 | 1200°C hour | <0.1 or less |
| Comparative Examples 7 | 30 | 20 | 10 | 35 | 87 | 8 | 1.6 | 2.4 | 1200°C 1hour | <0.1 or less |

Table3 Construction, Main Components and Properties of Refractories

| | Constitution | | Main Components | | Bulk Density | Thermal Conductivity (*) | Heat Treatment | Ratio of Ignition Weight Loss |
| | Alumina Content wt% | Mullite Content wt% | $Al_2O_3$ Content wt% | $SiO_2$ Content wt% | g/cm$^3$ | Kcal(mh°C) | | wt% |
|---|---|---|---|---|---|---|---|---|
| Comparative Examples 8 | 98 | - | 98 | 1 | 2.8 | 4.1 | None | <0.1 or less |
| Comparative Examples 9 | - | 95 | 68 | 26 | 2.1 | 3.8 | None | <0.1 or less |
| (*) conversion factor: W/m°C =0.86 kcal/(mh°C) | | | | | | | | |

The constituent components of refractory material used in Examples 5 - 26 and Comparative Examples 10 - 29 described below had the following properties.
Zirconia fiber: 5 $\mu$m of average diameter, 1.5 mm of average length.
. Zirconia whisker: 5 $\mu$m of average diameter, 500 $\mu$m of average length.
Stabilized zirconia fiber: 5 $\mu$m of average diameter, 1.5 mm of average length.
Stabilized zirconia whisker: 5 $\mu$m of average diameter, 500 $\mu$m of average length.
Ethyl silicate 40, which is a representative ethyl silicate, was used as the binder.

Example 5

$ZrO_2$, $Y_2O_3$ and $SiO_2$ were blended to provide the refractory construction as described in Table 4. A binder in 15 weight parts was blended with 100 weight parts of the resultant fiber mixture. The fiber mixture and the binder were sufficiently mixed to provide a slurry mixture. It was then shaped by a press machine into material in the form of a trough-shaped tundish. After hardening by natural drying, heat treatment was carried out at the heat-treating temperature shown in Table 4. The tundish 3 had the shape shown in Fig. 3. The dimensions of the respective parts were the same as that of the examples and comparative examples of the first invention.
In Table 4 are shown the chemical analysis results of $ZrO_2$, $Y_2O_3$ and $SiO_2$, bulk density, and the maximum thermal conductivity at 1200 to 1400°C. In addition, a sample was taken from the tundish and was ignited at 1400°C for 1 hour. The measured weight loss is also shown in Table 4.
NdFeB alloy, having 1450°C of temperature directly before the casting (tapping temperature) was caused to flow from one end of the tundish 1, while adjusting the melt feeding amount to attain 0.5 mm of thickness of the melt 2. The melt was cast from the other end of tundish onto a strip-casting roll in total amount of 100 kg. The melt flowed normally without solidification on the tundish. Incidentally, no preliminary heating of the tundish was carried out. When the condition of the tundish was examined after completion of casting, neither discoloring nor foreign matters suggesting its reaction with the melt, were recognized.
In addition, the easiness of melt flow in terms of the flowing coefficient defined in Example 1 was 0.71.

Example 6

A tundish consisting of the same refractory material as in Example 5 was used in the same strip-casting method as in Example 5 to cast a Mm (misch metal) Ni- based alloy (1450°C of tapping temperature). The melt flowed normally on the tundish without solidifying on the tundish. The flowing coefficient at this time was 0.71.
When the condition of the tundish was examined after completion of casting, reaction of the tundish with the melt was not recognized.

Example 7

A tundish, consisting of the same refractory material as in Example 5, was used in the same strip-casting method as in Example 5 to cast an Sm Co-based alloy (1450°C of tapping temperature). The melt flowed normally on the tundish without solidifying on the tundish. The flowing coefficient at this time was 0.77.
When the condition of the tundish was examined after completion of casting, reaction of the tundish with the melt was not recognized.

Examples 8 - 26 (Examples 14 and 15 are not according to the invention)

The tundishes consisting of the refractory material described in Table 4 were produced by the same method as in Example 5 and were used in the same strip-casting method as in Example 5 to cast an NdFeB-based alloy. The melt flowed normally on every tundish without solidifying on it. The tapping temperature was 1450°C. The flowing coefficients at these castings are shown in Table 4. Incidentally, preliminary heating of the tundishes was not carried out.
When the condition of the tundish was examined after completion of casting, reaction of the tundish with the melt was not recognized.

Comparative Examples 10 -17

The tundishes consisting of the refractory material described in Table 5 were used. It was attempted to cast an NdFeB-based alloy by the same strip-casting method as in Example 5. However, in case of each tundish, during the course of casting, the flowability of melt was gradually impaired, finally resulting in solidification. The flowing coefficient during the melt flow with difficulty was 0.27 - 0.30. Incidentally, the heating condition of this refractory material was 800°C for 1 hour. The ignition weight loss at 1400°C was 4.0 wt% in each tundish.

Comparative Examples 18 -25

The refractory materials having the compositions shown in Table 5 were formed into tundishes as in Example 5. The heating temperature of the refractory material was 1500°C for 1 hour. Every tundish was frequently broken during the forming.

Comparative Example 26

A tundish consisting of refractory material described in Table 5 as Comparative Example 26 was used. NdFeB-based alloy was cast by the same strip casting method as in Example 5. The melt flowed on the tundish without solidification. However, during the course of casting, melt leaked through the bottom of the tundish. The flowing coefficient, in which the melt leakage was corrected, was 0.43. When the condition of the tundish was examined after completion of casting, the tundish was broken to form an aperture. The circumference of the aperture was discolored in a broad range. When the tundish was broken to examine the fractured plane, it turned out that almost all parts of the tundish brought into contact with the melt but not the aperture portion was discolored. It turned out, thus, a reaction between the melt and tundish occurred during the casting. It was presumed from this fact that a reason for the lower flowing coefficient than in Example 5 was attributable to the reaction of the melt with the tundish, which impaired melt flowability.

Comparative Examples 27 - 28

The ordinary refractory material described in Table 6 as Comparative Examples 27 - 28 were formed into tundishes as in Example 5. It was attempted to produce NdFeB -based alloy by the same strip-casting method as in Example 5. However, as soon as the melt began to flow on the tundish, solidification took place and the casting was impossible. After that, the alloy left in the tundish was removed and the condition of tundish was examined. No reaction of the tundish with the melt was recognized.

Comparative Example 29

The ordinary refractory material described in Table 6 as Comparative Example 29 was formed into a tundish as in Example 5. It was attempted to produce NdFeB-based alloy by the same strip-casting method as in Example 5. However, as soon as the melt began to flow on the tundish, solidification took place and the casting was impossible.

Industrial Applicability

According to the present invention, it is possible to stably produce the alloys, which are optimum for the raw materials of rare-earth magnets, without a complicated process and apparatus. The present invention is, therefore, extremely useful. In addition to this alloy, quality control at the casting of various rare-earth alloys is facilitated.

Table 4

**Main Components and Properties of Refractories**

| | Construction, Construction | | | | Main Components | | | | | | | | Bulk Density g/cm³ | Thermal Conductivity ✳ kcal/(mh℃) | Heat Treatment | Ratio of Ignition Weight Loss wt% | Cast Alloy | Flowing Coefficient of Melt |
|---|---|---|---|---|---|---|---|---|---|---|---|---|---|---|---|---|---|---|
| | Zirconia Fiber wt% | Zirconia Whisker wt% | Stabilized Zirconia Fiber wt% | Stabilized Zirconia Whisker wt% | $ZrO_2$ wt% | $Y_2O_3$ wt% | $Ce_2O_3$ wt% | CaO wt% | MgO wt% | $Al_2O_3$ wt% | $TiO_2$ wt% | $SiO_2$ wt% | | | | | | |
| Example 5 | - | - | 100 | - | 91 | 8 | - | - | - | - | - | 0.2 | 0.48 | 0.16 | 1300℃1hour | <0.1 | NdFeB | 0.71 |
| Example 6 | - | - | 100 | - | 91 | 8 | - | - | - | - | - | 0.2 | 0.48 | 0.16 | 1300℃1hour | <0.1 | Mn-Ni | 0.71 |
| Example 7 | - | - | 100 | - | 91 | 8 | - | - | - | - | - | 0.2 | 0.48 | 0.16 | 1300℃1hour | <0.1 | SmCo | 0.77 |
| Example 8 | - | - | 100 | - | 86 | 13 | - | - | - | - | - | 0.2 | 0.48 | 0.16 | 1300℃1hour | <0.1 | NdFeB | 0.71 |
| Example 9 | 10 | - | 90 | - | 92 | 7 | - | - | - | - | - | 0.2 | 0.48 | 0.16 | 1300℃1hour | <0.1 | NdFeB | 0.71 |
| Example 10 | 40 | - | 60 | - | 94 | 5 | - | - | - | - | - | 0.2 | 0.48 | 0.16 | 1300℃1hour | <0.1 | NdFeB | 0.71 |
| Example 11 | - | - | 100 | - | 91 | - | 8 | - | - | - | - | 0.2 | 0.48 | 0.16 | 1300℃1hour | <0.1 | NdFeB | 0.71 |
| Example 12 | - | - | 100 | - | 94 | - | - | 5 | - | - | - | 0.2 | 0.48 | 0.16 | 1300℃1hour | <0.1 | NdFeB | 0.66 |
| Example 13 | - | - | 100 | - | 94 | - | - | - | 5 | - | - | 0.2 | 0.48 | 0.16 | 1300℃1hour | <0.1 | NdFeB | 0.65 |
| Example 14 | - | - | 100 | - | 94 | - | - | - | - | 5 | - | 0.2 | 0.48 | 0.16 | 1300℃1hour | <0.1 | NdFeB | 0.63 |
| Example 15 | - | - | 100 | - | 94 | - | - | - | - | - | 5 | 0.2 | 0.48 | 0.16 | 1300℃1hour | <0.1 | NdFeB | 0.64 |
| Example 16 | - | - | 100 | - | 86 | 8 | - | - | - | - | - | 5 | 0.48 | 0.16 | 1300℃1hour | <0.1 | NdFeB | 0.63 |
| Example 17 | - | - | 100 | - | 75 | 4 | - | - | - | 20 | - | - | 0.48 | 0.16 | 1300℃1hour | <0.1 | NdFeB | 0.62 |
| Example 18 | - | - | 100 | - | 91 | 8 | - | - | - | - | - | 0.2 | 1.1 | 0.25 | 1300℃1hour | <0.1 | NdFeB | 0.67 |
| Example 19 | - | - | 100 | - | 91 | 8 | - | - | - | - | - | 0.2 | 1.4 | 0.44 | 1300℃1hour | <0.1 | NdFeB | 0.66 |
| Example 20 | 10 | - | 90 | - | 82 | 7 | - | - | - | 5 | - | 5 | 0.48 | 0.16 | 1300℃1hour | <0.1 | NdFeB | 0.59 |
| Example 21 | - | - | 90 | 10 | 91 | 8 | - | - | - | - | - | 0.2 | 0.48 | 0.16 | 1300℃1hour | <0.1 | NdFeB | 0.71 |
| Example 22 | - | - | 50 | 50 | 91 | 8 | - | - | - | - | - | 0.2 | 0.48 | 0.16 | 1300℃1hour | <0.1 | NdFeB | 0.71 |
| Example 23 | - | - | - | 100 | 91 | 8 | - | - | - | - | - | 0.2 | 0.48 | 0.16 | 1300℃1hour | <0.1 | NdFeB | 0.71 |
| Example 24 | - | 10 | 90 | - | 91 | 8 | - | - | - | - | - | 0.2 | 0.48 | 0.16 | 1300℃1hour | <0.1 | NdFeB | 0.71 |
| Example 25 | 5 | 5 | 90 | - | 92 | 7 | - | - | - | - | - | 0.2 | 0.48 | 0.16 | 1300℃1hour | <0.1 | NdFeB | 0.71 |
| Example 26 | 5 | 5 | 80 | 10 | 92 | 7 | - | - | - | - | - | 0.2 | 0.48 | 0.16 | 1300℃1hour | <0.1 | NdFeB | 0.71 |

(✳) conversion factor : $W/m℃ = 0.86 kcal/(mh℃)$

Table 6

Construction, Main Components and Properties of Refractories

| | Construction | | | | Main Components | | | | | | | | Bulk Density | Thermal Conductivity (X) | Heat Treatment | Ratio of Ignition Weight Loss | Cast Alloy | Flowing Coefficient of Molt | Remarks |
|---|---|---|---|---|---|---|---|---|---|---|---|---|---|---|---|---|---|---|---|
| | Zirconia Fiber wt% | Zirconia Whisker wt% | Stabilized Zirconia Fiber wt% | Stabilized Zirconia Whisker wt% | $ZrO_2$ wt% | $Y_2O_3$ wt% | $Ce_2O_3$ wt% | CaO wt% | MgO wt% | $Al_2O_3$ wt% | TiO wt% | $SiO_2$ wt% | g/cm³ | kcal/(mh°C) | | wt% | | | |
| Comparative Example 10 | · | · | 100 | · | 91 | 8 | · | · | · | · | · | 0.2 | 0.48 | 0.16 | 800°C 1hour | 4.0 | NedFeB | 0.27 | Melt solidified during casting |
| Comparative Example 11 | 10 | · | 90 | · | 82 | 7 | · | · | · | 5 | · | 5 | 0.48 | 0.16 | 800°C 1hour | 4.0 | NedFeB | 0.30 | Melt solidified during casting |
| Comparative Example 12 | | 10 | 90 | · | 82 | 7 | · | · | · | 5 | · | 5 | 0.48 | 0.16 | 800°C 1hour | 4.0 | NedFeB | 0.30 | Melt solidified during casting |
| Comparative Example 13 | · | · | 90 | 10 | 91 | 8 | · | · | · | · | · | 0.2 | 0.48 | 0.16 | 800°C 1hour | 4.0 | NedFeB | 0.27 | Melt solidified during casting |
| Comparative Example 14 | · | · | 50 | 50 | 91 | 8 | · | · | · | · | · | 0.2 | 0.48 | 0.16 | 800°C 1hour | 4.0 | NedFeB | 0.27 | Melt solidified during casting |
| Comparative Example 15 | · | · | · | 100 | 91 | 8 | · | · | · | · | · | 0.2 | 0.48 | 0.16 | 800°C 1hour | 4.0 | NedFeB | 0.27 | Melt solidified during casting |
| Comparative Example 16 | 5 | 5 | 90 | · | 82 | 7 | · | · | · | 5 | · | 5 | 0.48 | 0.16 | 800°C 1hour | 4.0 | NedFeB | 0.30 | Melt solidified during casting |
| Comparative Example 17 | 5 | 5 | 80 | 10 | 92 | 7 | · | · | · | · | · | 0.2 | 0.48 | 0.16 | 800°C 1hour | 4.0 | NedFeB | 0.30 | Melt solidified during casting |
| Comparative Example 18 | · | · | 100 | | 91 | 8 | · | · | · | · | · | 0.2 | 0.48 | 0.16 | 1500°C 1hour | <0.1 | · | · | Refract rise fractal during casting |
| Comparative Example 19 | 10 | · | 90 | · | 82 | 7 | | | | 5 | · | 5 | 0.48 | 0.16 | 1500°C 1hour | <0.1 | · | · | Refract rise fractal during casting |
| Comparative Example 20 | · | 10 | 90 | · | 82 | 7 | · | · | | 5 | · | 5 | 0.48 | 0.16 | 1500°C 1hour | <0.1 | · | · | Refract rise fractal during casting |
| Comparative Example 21 | · | · | 90 | 10 | 91 | 8 | · | · | · | · | · | 0.2 | 0.48 | 0.16 | 1500°C 1hour | <0.1 | · | · | Refract rise fractal during casting |
| Comparative Example 22 | · | · | 50 | 50 | 91 | 8 | · | · | · | · | · | 0.2 | 0.48 | 0.16 | 1500°C 1hour | <0.1 | · | · | Refract rise fractal during casting |
| Comparative Example 23 | | · | · | 100 | 91 | 8 | · | · | · | · | · | 0.2 | 0.48 | 0.16 | 1500°C 1hour | <0.1 | · | · | Refract rise fractal during casting |
| Comparative Example 24 | 5 | 5 | 90 | · | 82 | 7 | · | · | · | 5 | · | 5 | 0.48 | 0.16 | 1500°C 1hour | <0.1 | · | · | Refract rise fractal during casting |
| Comparative Example 25 | 5 | 5 | 80 | 10 | 92 | 7 | | · | · | · | · | 0.2 | 0.48 | 0.16 | 1500°C 1hour | <0.1 | · | · | Refract rise fractal during casting |
| Comparative Example 26 | · | · | 100 | · | 69 | · | · | · | · | 20 | · | 20 | 0.48 | 0.16 | 1300°C 1hour | <0.1 | NedFeB | 0.43 | Maltreated with refractories |

(X) conversion factor : $W/m°C = 0.86 kcal/(mh°C)$

EP 1 659 102 B1

Table 6

| Main Components and Properties of Refractories | | | | | | | | | | | | | | |
|---|---|---|---|---|---|---|---|---|---|---|---|---|---|---|
| | Main Components | | | | | | | | Bulk Density g/cm$^3$ | Thermal Conductivity (*) kcal/ (mh°C) | Heat Treatment | Ratio of Ignition Weight Loss wt% | Cast Alloy | Flowing Coefficient of Melt | Remarks |
| | $ZrO_2$ wt% | $Y_2O_2$ wt% | $Ce_2O_3$ wt% | CaO wt5 | MgO wt% | $Al_2O_3$ wt% | TiO wt% | $SiO_2$ wt% | | | | | | | |
| Comparative Example 27 | 91 | 8 | - | - | - | - | - | - | 2.4 | 3.4 | none | <0.1 | NdFeB | - | After casting start, immediate solidification |
| Comparative Example 28 | 93 | - | - | 5 | - | - | - | - | 2.4 | 3.4 | none | <0.1 | NdFeB | - | After casting start, immediate solidification |
| Comparative Example 29 | 91 | - | - | 5 | - | - | - | - | 6.3 | 7.6 | none | <0.1 | NdFeB | - | After casting start, immediate solidification |
| (*) Conversion factor: W/m°C = 0.86 kca/(mh°C) | | | | | | | | | | | | | | |

## Claims

1. Refractory material for casting a rare-earth alloy, **characterized in that** it contains 70 wt% or more of one or more of zirconia fiber, zirconia whisker, stabilized zirconia fiber and stabilized zirconia whisker and 30 wt% or less of one or more of $Y_2O_3$, $Ce_2O_3$, CaO, MgO, $Al_2O_3$, $TiO_2$ and $SiO_2$, has $2g/cm^3$ or less of bulk density, has 0.581 W/m°C (0.50 kcal /(mh°C)) or less of thermal conductivity in the temperature range of from 1200 to 1400°C, and has 0.5 wt% or less of ratio of ignition weight-loss under the heating condition of 1400°C for 1 hour.

2. A method for producing refractory material according to claim 1 for casting a rare-earth alloy, **characterized in that** one or more selected from one or more of zirconia fiber, zirconia whisker, stabilized zirconia fiber and stabilized zirconia whisker and one or more binder of the inorganic binder and organic binder are mixed to prepare a mixture, which provides 70 wt% or more of $ZrO_2$ and 30 wt% or less of one or more of $Y_2O_3$, $Ce_2O_3$, CaO, MgO, $Al_2O_3$, $TiO_2$ and $SiO_2$, in the refractory material, and the mixture is shaped, dried to harden, and is further heat treated at 1000°C to 1400 °C, thereby decomposing said binder and hence forming a porous structure having $2g/cm^3$ of less of bulk density, has 0.581 W/m°C (0.50 kcal / (mh°C)) or less of thermal conductivity in the temperature range of from 1200 to 1400°C, and has 0.5 wt% or less of ratio of ignition weight-loss under the heating condition of 1400°C for 1 hour.

3. A method for producing refractory material for casting a rare-earth alloy according to claim 2, wherein at least one of zirconia fiber and stabilized zirconia fiber is used.

4. A method for producing refractory material for casting a rare-earth alloy according to claim 2 or 3, wherein at least one of zirconia whisker and stabilized zirconia whisker is used.

5. Use of pouring means which is made out from refractory material according to claim 1 for casting a rare-earth alloy for facilitated quality control, **characterized in that** a melt of the rare-earth alloy is poured onto the surface of a rotary roll or inner surface of a rotary cylinder by means of said a pouring means.

6. Use of pouring means according to claim 5, wherein said pouring means is a tundish (3), a trough (13b) or a nozzle.

7. Use of pouring means according to any one of claims 5 or 6, wherein said rotary roll is a single roll 4 or twin rolls for strip casting.

8. Use of pouring means according to claim 7, **characterized in that** said rare-earth alloy is cast into a sheet or a strip having from 0.1 to 1 mm of thickness.

9. Use of pouring means according to any one of claims 5 to 8, wherein said rotary cylinder is a rotary mold for centrifugal casting.

10. Use of pouring means according to claim 9, **characterized in that** said rare-earth alloy is cast into cylindrical material having from 1 to 20 mm of thickness.

11. Use of pouring means according to any one of claims 6 to 10, **characterized in that** the melt of a rare-earth alloy is cast without preliminary heating of said tundish, trough or nozzle.

## Patentansprüche

1. Feuerfestes Material zum Gießen von einer seltene Erden enthaltenden Legierung, **dadurch gekennzeichnet, dass** es 70 Gewichtsprozentanteil oder mehr an Zirkonerdefaser, Zirkonkristall, stabilisierte Zirkonfaser und stabilisiertes Zirkon kristall; und 30 Gewichtsprozentanteil oder weniger von einem oder mehreren enthält aus $Y_2O_3$, $Ce_2O_3$, CaO, MgO, $Al_2O_3$, $TiO_2$ und $SiO_2$; $2 \, g/cm^3$ oder weniger Massendichte hat; 0,581 W/m°C (0,50 kcal/(mh°C)) oder eine geringere Wärmeleitfähigkeit im Temperaturbereich von 1200 bis 1400 °C hat; und 0,5 Gewichtsprozentanteil oder ein geringeres Verhältnis eines Zündungsgewichtsverlustes unter der Wärmebedingung von 1400 °C bei einer Stunde hat.

2. Verfahren zum Herstellen eines feuerfesten Materials nach Anspruch 1 zum Gießen von einer seltene Erden enthaltenden Legierung, **dadurch gekennzeichnet, dass** eines oder mehreres, welches aus einem oder mehreren aus einer Zirkonfaser, einem Zirkonkristall, einer stabilisierten Zirkonfaser und einem stabilisierten Zirkonkristall, und einem oder mehreren aus einer Verbindung aus der anorganischen Verbindung und organischen Verbindung gemischt werden, um eine Mischung vorzubereiten, welche 70 Gewichtsprozentanteil oder mehr von $ZrO_2$, und 30 Gewichtsprozentanteil oder weniger aus einem oder mehreren aus $Y_2O_3$, $Ce_2O_3$, CaO, MgO, $Al_2O_3$, $TiO_2$ und $SiO_2$ in dem feuerfesten Material bereitstellt, und wobei die Mischung gehärtet, zum Härten getrocknet und ferner bei 1000 °C bis 1400 °C wärmebehandelt wird, wodurch das Bindemittel abgelagert wird und somit eine poröse Struktur ausgebildet wird, welche 2 g/cm$^3$ oder weniger Massendichte hat; 0,581 W/m°C (0,50 kcal/(mh°C)) oder eine geringere Wärmeleitfähigkeit im Temperaturbereich von 1200 bis 1400 °C hat, und 0,5 Gewichtsprozentanteil oder ein geringeres Verhältnis eines Zündungsgewichtsverlustes unter der Wärmebedingung von 1400 °C bei einer Stunde hat.

3. Verfahren zum Herstellen eines feuerfesten Materials zum Gießen von einer seltene Erden enthaltenden Legierung nach Anspruch 2, bei welchem zumindest eines aus der Zirkonfaser und der stabilisierten Zirkonfaser verwendet wird.

4. Verfahren zum Herstellen eines feuerfesten Materials zum Gießen von einer seltene Erden enthaltenden Legierung nach Anspruch 2 oder 3, bei welchem zumindest eines aus dem Zirkonkristall und dem stabilisierten Zirkonkristall verwendet wird.

5. Verwendung eines Gießelements, welches aus einem feuerfesten Material nach Anspruch 1 erstellt ist, zum Gießen von einer seltene Erden enthaltenden Legierung zur Unterstützung von einer Qualitätssteuerung, **dadurch gekennzeichnet, dass** ein Guss aus der seltene Erden enthaltenden Legierung auf die Oberfläche von einer Drehwalze oder eine Innenfläche von einem Drehzylinder mittels eines Gießelements gegossen wird.

6. Verwendung eines Gießelements nach Anspruch 5, wobei das Gießelement eine Zwischenpfanne (3), eine Rinne (13b) oder eine Düse ist.

7. Verwendung eines Gießelements nach Anspruch 5 oder 6, wobei die Drehwalze eine Einzelwalze 4 oder eine Doppelwalze für ein Bandgießen ist.

8. Verwendung eines Gießelements nach Anspruch 7, **dadurch gekennzeichnet, dass** die seltene Erden enthaltene Legierung zu einer Bahn oder einem Streifen gegossen wird, welche bzw. welcher eine Dicke zwischen 0,1 und 1 mm hat.

9. Verwendung eines Gießelements nach einem der Ansprüche 5 bis 8, wobei der Drehzylinder eine Drehgussmasse für ein Zentrifugalgießen ist.

10. Verwendung eines Gießelements nach Anspruch 9, **dadurch gekennzeichnet, dass** die seltene Erden enthaltene Legierung in ein zylindrisches Material gegossen ist, welches eine Dicke zwischen 1 und 20 mm hat.

11. Verwendung eines Gießelements nach einem der Ansprüche 6 bis 10, **dadurch gekennzeichnet, dass** das Gussmaterial aus einer seltene Erden enthaltenden Legierung ohne eine vorherige Erwärmung von der Gießwanne, der Rinne oder der Düse gegossen ist.

## Revendications

1. Matériau réfractaire pour le coulage d'un alliage de terre rare, **caractérisé en ce qu'**il contient 70 % en poids ou plus d'une ou plusieurs des fibre de zircone, trichite de zircone, fibre de zircone stabilisée et trichite de zircone stabilisée et 30 % en poids ou moins d'un ou plusieurs des $Y_2O_3$, $Ce_2O_3$, CaO, MgO, $Al_2O_3$, $TiO_2$ et $SiO_2$, possède une densité apparente de 2 g/cm$^3$ ou moins, possède une conductivité thermique de 0,581 W/ m°C (0,50 kcal/(mh°C)) ou moins dans la plage de température allant de 1 200 à 1 400 °C, et possède un rapport de perte de poids par ignition de 0,5 % en poids ou moins dans les conditions de chauffage de 1 400 °C pendant 1 heure.

2. Procédé de production d'un matériau réfractaire selon la revendication 1 pour le coulage d'un alliage de terre rare, **caractérisé en ce qu'**une ou plusieurs des fibre de zircone, trichite de zircone, fibre de zircone stabilisée et trichite de zircone stabilisée et un ou plusieurs liants des liants inorganiques et liants organiques sont mélangés pour préparer un mélange qui donne 70 % en poids ou plus de $ZrO_2$ et 30 % en poids ou moins d'un ou plusieurs des $Y_2O_3$, $Ce_2O_3$, CaO, MgO, $Al_2O_3$, $TiO_2$ et $SiO_2$, dans le matériau réfractaire, et le mélange est façonné, séché jusqu'au durcissement et en outre traité thermiquement à 1 000 °C à 1 400 °C, décomposant ainsi ledit liant et formant de ce fait une structure poreuse qui possède une densité apparente de 2 g/cm$^3$ ou moins, possède une conductivité thermique de 0,581 W/ m°C (0,50 kcal/(mh°C)) ou moins dans la plage de température allant de 1 200 à 1 400 °C, et possède un rapport de perte de poids par ignition de 0,5 % en poids ou moins dans les conditions de chauffage de 1400 °C pendant 1 heure.

3. Procédé de production d'un matériau réfractaire pour le coulage d'un alliage de terre rare selon la revendication 2, dans lequel au moins une des fibre de zircone et fibre de zircone stabilisée est utilisée.

4. Procédé de production d'un matériau réfractaire pour le coulage d'un alliage de terre rare selon la revendication 2 ou la revendication 3, dans lequel au moins une des trichite de zircone et trichite de zircone stabilisée est utilisée.

5. Utilisation d'un moyen de coulée qui est constitué d'un matériau réfractaire selon la revendication 1 pour le coulage d'un alliage de terre rare pour un contrôle qualité facilité, **caractérisée en ce qu'**un fondu de l'alliage de terre rare est versé sur la surface d'un rouleau rotatif ou sur une surface interne d'un cylindre rotatif à l'aide dudit moyen de coulée.

6. Utilisation d'un moyen de coulée selon la revendication 5, dans laquelle ledit moyen de coulée est un panier de coulée (3), une cuve (13b) ou une buse.

7. Utilisation d'un moyen de coulée selon la revendication 5 ou 6, dans laquelle ledit rouleau rotatif est un rouleau unique (4) ou des rouleaux jumelés pour le coulage en bande.

8. Utilisation d'un moyen de coulée selon la revendication 7, **caractérisée en ce que** ledit alliage de terre rare est coulé en une feuille ou une bande ayant une épaisseur de 0,1 à 1 mm.

9. Utilisation d'un moyen de coulée selon l'une quelconque des revendications 5 à 8, dans laquelle ledit cylindre rotatif est un moule rotatif pour un coulage centrifuge.

10. Utilisation d'un moyen de coulée selon la revendication 9, **caractérisée en ce que** ledit alliage de terre rare est coulé en un matériau cylindrique ayant une épaisseur de 1 à 20 mm.

11. Utilisation d'un moyen de coulée selon l'une quelconque des revendications 6 à 10, **caractérisée en ce que** le fondu d'un alliage de terre rare est coulé sans chauffage préliminaire dudit panier de coulée ou de ladite cuve ou buse.

# Fig. 1

**Fig. 2**

EP 1 659 102 B1

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5222488 A
- JP 5295490 A
- JP 53207920 B
- EP 0784350 A1
- GB 2149773 A

**Non-patent literature cited in the description**

- **K. Nakajima ; S. Shimada.** *Solid State Ionics,* 1997, vol. 101-103, 131-135